# EUROPÄISCHE PATENTSCHRIFT

(11) **EP 1 138 961 B1**
(45) Veröffentlichungstag und Bekanntmachung des Hinweises auf die Patenterteilung: **19.05.2004**
(21) Anmeldenummer: 01107598.3
(22) Anmeldetag: 27.03.2001
(51) Int. Cl.: F16B 21/02, F25D 23/06

(54) **Verdampferbefestigung**
Fastening element for a vaporizer
Elément de fixation pour un vaporisateur

(30) Priorität: 29.03.2000 DE 20005803 U
(43) Veröffentlichungstag der Anmeldung: 04.10.2001
(73) Patentinhaber: LIEBHERR-HAUSGERÄTE GMBH, 88416 Ochsenhausen (DE)
(72) Erfinder: Feneberg, Fritz, 88416 Ochsenhausen (DE); Jendrusch, Holger, 88416 Ochsenhausen (DE)
(74) Vertreter: Gossel, Hans K., Dipl.-Ing.

(56) Entgegenhaltungen:
- EP-A- 0 641 941
- GB-A- 1 540 589
- US-A- 3 319 510
- US-A- 3 534 936
- US-A- 4 770 586

## Beschreibung

Die Erfindung betrifft ein Befestigungselement, vorzugsweise zum Befestigen einer Verdampferplatte an der Rückwand der Kühlgutkammer eines Kühlgeräts, mit einem in eine Bohrung oder eine Ausnehmung einsetzbaren und in dieser gehalterten Schaft.

Es besteht das Bedürfnis, Teile in der Weise aneinander zu befestigen, daß diese Relativbewegungen gegeneinander durchführen können, ohne Verspannungen hervorzurufen, die zu Luftschallemissionen führen können. Ist das befestigte Teil an dem tragenden Teil in zwei oder mehr Punkten befestigt, ist es häufig erforderlich, daß sich das befestigte Teil relativ zu dem tragenden dehnen und schrumpfen kann, um Verspannungen zu vermeiden, welche die Ursache von störenden Luftschallemissionen sind.

Ein schwingungsdämpfes Befestigungselement ist aus der US 3 534 936 A bekannt.

Insbesondere können bei Kühlgeräten Luftschallemissionen, beispielsweise in Form von Knackgeräuschen entstehen, wenn die Verdampferplatte, wie beispielsweise in EP 0 641 941 B1 beschrieben, mit relativ starren Befestigungsbolzen in Einziehungen oder Vertiefungen der Rückwand der Kühlkammer befestigt ist. Bei dem Betrieb des Geräts schrumpft der Verdampfer während der Kühlphase und er dehnt sich während der Abtauphase aus. Dadurch entstehen Relativbewegungen zu den Befestigungsstellen. Weiterhin können die Lochränder der Verdampferplatte mit den relativ starren Befestigungsbolzen vereisen. Durch die Relativbewegung des Verdampfers können dann die Vereisungsstellen unter Abgabe von Schallemissionen (Knackgeräusche) brechen. Die Relativbewegung des Verdampfers wird durch die Befestigungsbolzen auf deren Verbindungsstellen in den Einziehungen oder Vertiefungen der Rückwand übertragen. Durch schlagartiges Überwinden der Haftreibung können dann in Bruchteilen von Sekunden Schallemissionen (Knackgeräusche) erzeugt werden.

Aufgabe der Erfindung ist es, ein einfach ausgestaltetes Befestigungselement der eingangs angegebenen Art zu schaffen, das eine Befestigung von Gegenständen in einer Weise ermöglicht, daß die Übertragung von Schwingungen gedämpft und/oder Verspannungen zwischen den aneinander befestigten Teilen vermieden werden, und das störende Luftschallemissionen verhindert.

Erfindungsgemäß wird diese Aufgabe dadurch gelöst, daß der Schaft von einer Manschette oder Buchse aus elastomerem Material eingefaßt ist, die mit einer Halteeinrichtung für das zu befestigende Teil versehen ist gemäß kennzeichen von Anspruch 1.

Bei dem erfindungsgemäßen Befestigungselement dient der Schaft der Halterung an dem tragenden Teil, während Schwingungen durch die Manschette oder Buchse aus elastomerem Material gedämpft und Verspannungen durch diese zumindest vermindert werden.

Die an der Manschette oder Buchse vorgesehene Halteeinrichtung besteht aus einer Nut, die den Rand einer Bohrung des zu befestigenden Teils einfaßt.

Zweckmäßigerweise ist die Manschette oder Buchse an ihrem äußeren Ende mit einem kegelstumpfförmigen Abschnitt versehen, an den die Nut anschließt. Diese Ausführungsform ermöglicht es, die Bohrung des zu befestigenden Teils über den kegelstumpfförmigen Abschnitt aufzuschieben, bis diese in die Nut einschnappt.

Der Schaft kann aus einer mit einem Kopf versehenen Metallschraube bestehen. Der Schaft kann auch aus einem mit einem Kopf versehenen Kunststoffbolzen bestehen, der zweckmäßigerweise hohl ausgebildet ist.

Der Schaft aus Kunststoff oder Metall kann kraft- und/oder formschlüssig in der Bohrung oder Ausnehmung gehalten sein.

Nach einer weiteren Ausgestaltung der Erfindung ist vorgesehen, daß der Schaft und die Bohrung oder Ausnehmung mit mindestens einem exzentrischen Abschnitt in der Weise versehen sind, daß der Schaft etwa durch eine Vierteldrehung in der Bohrung oder Aussparung festlegbar ist. Durch Verdrehung des exzentrischen Abschnitts in der Bohrung oder der Aussparung findet eine Verspannung des Schafts in diesen statt, wobei der exzentrische Abschnitt des Schafts in der Bohrung oder der Aussparung nicht nur kraftschlüssig, sondern auch formschlüssig gehalten wird, weil der entsprechende Wandungsabschnitt der Bohrung oder Aussparung durch Fließen den exzentrischen Abschnitt einfaßt.

Die Schraube oder der Kunststoffbolzen können mit der aus einem thermoplastischen Elastomer bestehenden Manschette oder Buchse umspritzt sein.

Die Manschette oder Buchse aus elastomerem Material kann auch für sich allein vorgefertigt und dann auf die Schraube oder den Bolzen aufgesteckt sein, wobei dann die Schraube oder der Bolzen mit Bunden oder Köpfen versehen ist, um ein Verschieben oder Auswandern der Manschette oder Buchse zu verhindern. Die Manschette oder Buchse kann beispielsweise auch durch Vulkanisieren und Formpressen hergestellt sein.

Die Dicke des Mantels der Manschette oder der Buchse ist so gewählt, daß das elastomere Material die gewünschte Dämpfungswirkung hat bzw. Verspannungen auszugleichen vermag. Zweckmäßigerweise ist der Durchmesser der Nut etwa doppelt so groß wie der Durchmesser der Schraube oder des Bolzens in deren Ebene.

Nach einer erfinderischen Ausgestaltung und Verwendung ist vorgesehen, daß mindestens drei und vorzugsweise vier Schrauben oder Bolzen in Einziehungen oder Bohrungen der Rückwand einer Kühlgutkammer eines Kühlgeräts gehaltert sind und auf deren Manschetten oder Buchsen ein Verdampfer bzw. eine Verdampferplatte in der Weise aufgerastet ist, daß dessen bzw. deren Haltebohrungen in den Nuten greifen. Wird ein Verdampfer bzw. eine Verdampferplatte oder -platine in dieser Weise durch vorzugsweise vier gummigelagerte Befestigunsgpunkte mit der Rückseite des Kühlgutbehälters verbunden, können Schwingungen von dem beschriebenen Verbindungselement nur in gedämpfter Form übertragen werden, so daß eine gute Geräuschdämmung erreicht wird. Weiterhin kann sich die Verdampferplatte allseitig ausdehnen und auch schwingen, so daß unerwünschte Knackgeräusche bei Temperaturschwankungen im Kühlgerät und Druckdifferenzen in den Verdampferkanälen vermieden werden.

Ausführungsbeispiele der Erfindung werden nachstehend anhand der Zeichnung näher erläutert. In dieser zeigt
- Fig. 1: einen Schnitt durch einen Teil einer Verdampferplatte und einen Teil der Rückwand der Kühlgutkammer eines Kühlgeräts im Bereich eines beide verbindenden Befestigungselements und
- Fig. 2: eine der Fig. 1 entsprechende Darstellung, bei der die Verdampferplatte mit der Rückwand der Kühlgutkammer durch ein anderes Befestigungselement verbunden ist.

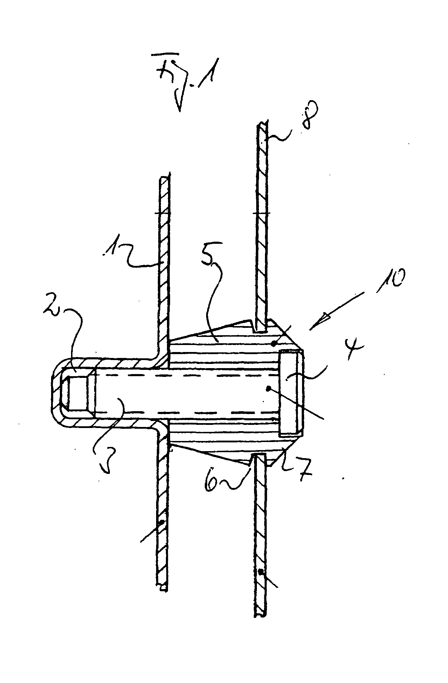

Bei der Ausführungsform nach Fig. 1 ist die Kunststoffschale 1 der Rückwand der Kühlgutkammer eines Kühlgeräts mit einer lochförmigen Einziehung 2 versehen. In dieser Einziehung 2 ist der Schaft einer Metallschraube 3 gehaltert, die mit einem endseitigen Kopf 4 versehen ist. Der Schaft 3 der Metallschraube durchsetzt eine Manschette 5 aus elastomerem Material, im dargestellten Ausführungsbeispiel aus einem thermoplastischem Gummi. Die Manschette 5 ist mit einer Ringnut 6 versehen. Der endseitige Abschnitt 7 der Gummimanschette 5 ist in der dargestellten Weise kegelstumpfförmig ausgebildet. Der Kopf 4 der Schraube 3 ist in eine etwa komplementäre Ausnehmung der Gummimanschette 5 eingebettet. Zur Befestigung der Verdampferplatte 8 dienen vier insgesamt mit 10 bezeichnete Befestigungselemente, wobei die im wesentlichen rechteckige Verdampferplatte 8 im Bereich ihrer Ecken mit Bohrungen versehen ist, die über die kegelstumpfförmigen Abschnitte 7 der Gummimanschetten 5 in der Weise aufgeschoben werden, daß sie in die Ringnuten 6 einschnappen.

Der Abschnitt der Manschetten 5 zwischen der Rückwand 1 und der Verdampferplatte 8 kann sich in der dargestellten Weise kegelstumpfartig verjüngen.

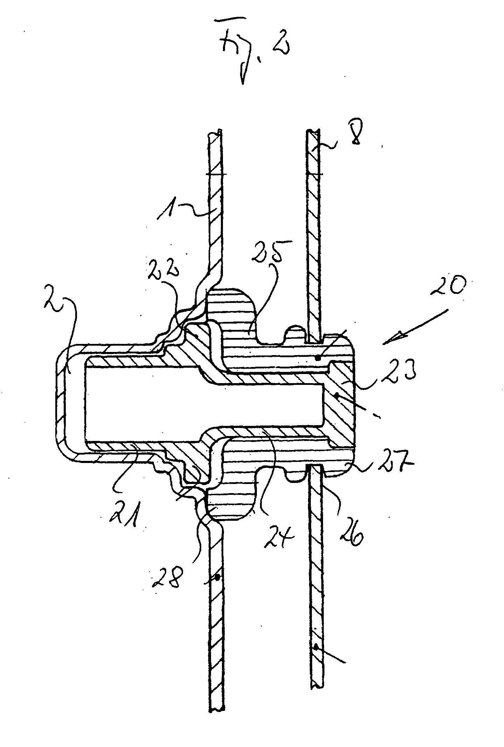

Bei dem Ausführungsbeispiel nach Fig. 2 besteht der Schaft des insgesamt mit 20 bezeichneten Befestigungselements aus einem hohlen Spritzgußteil aus Kunststoff 21. Zwischen einem Bund 22 des Kunststoffbolzens und dem endseitigen Kopf 23 ist auf dem hohlen Schaftteil 24 des Kunststoffbolzens eine profilierte Manschette 25 aus einem thermoplastischen Gummi gehaltert. Die Manschette 25 ist mit einer Ringnut 26 versehen, die an einen endseitigen abgerundeten Abschnitt 27 anschließt. Die Manschette 25 ist mit einem verbreiterten ringförmigen Fußteil 28 versehen, mit der diese dichtend an der Rückwand 1 anliegt.

Die Schäfte der Schrauben 3 und des Kunststoffbolzens 21 können durch kraftschlüßiges Einstecken, Eindrehen oder Verdrehen in den Bohrungen oder Ausnehmungen 2 festgelegt sein.

## Patentansprüche

1. Befestigungselement (10, 20) zum Befestigen einer Verdampferplatte (8) an der Rückwand (1) einer Kühlgutkammer eines Kühlgeräts,
mit einem in eine Bohrung oder eine Ausnehmung (2) einsetzbaren und in dieser gehalterten Schaft, wobei
der Schaft (3, 21) von einer Manschette (5, 25) teilweise eingefaßt ist,
das Befestigungselement aus zwei Teilen besteht, nämlich dem Schaft (3, 21) und der diesen umgebenden Manschette (5, 25),
der Schaft (3, 21) und die Manschette (5, 25) aus unterschiedlichen Materialien bestehen, wobei der Schaft aus formsteifem Material und die Manschette als Dämpfer ausgebildet ist und aus einem Elastomer besteht,
**dadurch gekennzeichnet, daß**
die Manschette (5, 25) als Halteeinrichtung, die unmittelbar das zu befestigende Teil (8) trägt, eine Ringnut (6, 26) aufweist, in die das zu befestigende Teil mit einer Bohrung einschnappbar ist.

2. Befestigungselement nach Anspruch 1, **dadurch gekennzeichnet, daß** die Manschette oder Buchse (5, 25) an ihrem äußeren Ende mit einem kegelstumpfförmigen oder abgerundeten Abschnitt (7, 27) versehen ist, an den die Nut (6, 26) anschließt.

3. Befestigungselement nach Anspruch 1 oder 2, **dadurch gekennzeichnet, daß** der Schaft (3) aus einer mit einem Kopf (4) versehenen Metallschraube besteht.

4. Befestigungselement nach einem der Ansprüche 1 bis 3, **dadurch gekennzeichnet, daß** der Schaft aus einem mit einem Kopf (23) versehenen Kunststoffbolzen (21) besteht.

5. Befestigungselement nach einem der Ansprüche 1 bis 4, **dadurch gekennzeichnet, daß** der Schaft aus Kunststoff oder Metall kraft- und/oder formschlüssig in der Bohrung oder Ausnehmung gehalten ist.

6. Befestigungselement nach Anspruch 5, **dadurch gekennzeichnet, daß** der Schaft und die Bohrung oder Aussparung jeweils mit mindestens einem exzentrischen Abschnitt in der Weise versehen sind, daß der Schaft durch eine etwa Vierteldrehung in der Bohrung oder Ausnehmung festlegbar ist.

7. Befestigungselement nach Anspruch 4 - 6, **dadurch gekennzeichnet, daß** der Kunststoffbolzen (21) hohl ausgebildet ist.

8. Befestigungselement nach einem der Ansprüche 1 bis 7, **dadurch gekennzeichnet, daß** die Schraube oder der Kunststoffbolzen mit der aus einem thermoplastischen Elastomer bestehenden Manschette oder Buchse (5, 25) umspritzt sind.

9. Befestigungselement nach einem der Ansprüche 1 bis 8, **dadurch gekennzeichnet, daß** die vorgefertigte Manschette oder Buchse aus elastomerem Material auf die Schraube oder den Schraubenbolzen aufgesteckt ist.

10. Befestigungselement nach einem der Ansprüche 1 bis 9, **dadurch gekennzeichnet, daß** der Durchmesser der Ringnut (6, 26) etwa doppelt so groß ist wie der Durchmesser der Schraube (3) oder des Bolzens (21) in deren Ebene.

11. Befestigungselement nach einem der Ansprüche 1 bis 10, **dadurch gekennzeichnet; daß** mindestens drei und vorzugsweise vier Schrauben oder Bolzen in Einziehungen (2) oder Bohrungen der Rückwand einer Kühlgutkammer (1) eines Kühlgeräts gehaltert sind und auf deren Manschetten oder Buchsen (5, 26) ein Verdampfer bzw. eine Verdampferplatte (8) in der Weise aufgerastet ist, daß dessen bzw. deren Haltebohrungen in die Nuten (6, 26) greifen.

## Claims

1. Fastening element (10, 20) for fastening a vaporizer plate (8) to the rear wall (1) of a chamber for goods to be cooled in a refrigerating appliance,
having a shank which can be inserted into a hole or a recess (2) and is secured therein,
the shank (3, 21) being partially surrounded by a sleeve (5, 25),
the fastening element consisting of two parts, namely the shank (3, 21) and the sleeve (5, 25) surrounding the latter,
the shank (3, 21) and the sleeve (5, 25) consisting of different materials, the shank being formed from dimensionally stable material and the sleeve being designed as a damper and consisting of an elastomer,
**characterized in that**
the sleeve (5, 25) as a holding device which directly carries the part (8) which is to be fastened has an annular groove (6, 26) into which the part which is to be fastened and which has a hole can be snapped.

2. Fastening element according to Claim 1, **characterized in that** the sleeve or bushing (5, 25) is provided at its outer end with a frustoconical or rounded section (7, 27) to which the groove (6, 26) is joined.

3. Fastening element according to Claim 1 or 2, **characterized in that** the shank (3) comprises a metal screw which is provided with a head (4).

4. Fastening element according to one of Claims 1 to 3, **characterized in that** the shank comprises a plastic bolt (21) which is provided with a head (23).

5. Fastening element according to one of Claims 1 to 4, **characterized in that** the plastic or metal shank is held in the hole or recess with a frictional and/or form-fitting connection.

6. Fastening element according to Claim 5, **characterized in that** the shank and the hole or cutout are provided in each case with at least one eccentric section in such a manner that the shank can be secured in the hole or recess by an approximate quarter turn.

7. Fastening element according to Claims 4-6, **characterized in that** the plastic bolt (21) is of hollow design.

8. Fastening element according to one of Claims 1 to 7, **characterized in that** the screw or the plastic bolt is encapsulated by injection moulding with the sleeve or bushing (5, 25), which consists of a thermoplastic elastomer.

9. Fastening element according to one of Claims 1 to 8, **characterized in that** the pre-manufactured sleeve or bushing of elastomeric material is pushed onto the screw or the screw bolt.

10. Fastening element according to one of Claims 1 to 9, **characterized in that** the diameter of the annular groove (6, 26) is approximately twice as large as the diameter of the screw (3) or of the bolt (21) in the plane of said annular groove.

11. Fastening element according to one of Claims 1 to 10, **characterized in that** at least three and preferably four screws or bolts are secured in tapered sections (2) or holes in the rear wall of a chamber (1) for goods to be cooled in a refrigerating appliance and a vaporizer or a vaporizer plate (8) is latched onto the sleeves or bushings (5, 26) of said screws or bolts in such a manner that its retaining holes reach into the grooves (6, 26).

## Revendications

1. Elément de fixation (10, 20) pour fixer une plaque d'évaporateur (8) à la paroi arrière (1) d'une enceinte de réfrigération d'un réfrigérateur,
avec une tige insérable dans un alésage ou un évidement (2) et retenue dans celui-ci, où
la tige (3, 21) est entourée partiellement par une manchette (5, 25),
l'élément de fixation est constitué de deux parties, à savoir de la tige (3, 21) et de la manchette (5, 25) entourant celle-ci,
la tige (3, 21) et la manchette (5, 25) sont réalisées en des matériaux différents, où la tige est réalisée en un matériau indéformable, et la manchette est réalisée comme amortisseur et est constituée d'un élastomère,
**caractérisé en ce que**
la manchette (5, 25) présente comme installation de retenue, qui porte directement la partie à fixer (8), une rainure annulaire (6, 26) dans laquelle la partie à fixer avec un alésage peut s'enclencher.

2. Elément de fixation selon la revendication 1, **caractérisé en ce que** la manchette ou douille (5, 25) présente à son extrémité extérieure un tronçon tronconique ou arrondi (7, 27) auquel fait suite la rainure (6, 26).

3. Elément de fixation selon la revendication 1 ou 2, **caractérisé en ce que** la tige (3) est constituée d'une vis métallique munie d'une tête (4).

4. Elément de fixation selon l'une des revendications 1 à 3, **caractérisé en ce que** la tige est constituée d'un boulon (21) en matériau synthétique muni d'une tête (23).

5. Elément de fixation selon l'une des revendications 1 à 4, **caractérisé en ce que** la tige en matériau synthétique ou en métal est retenue par force et/ou par concordance des formes dans l'alésage ou l'évidement.

6. Elément de fixation selon la revendication 5, **caractérisé en ce que** la tige et l'alésage ou l'évidement sont pourvus respectivement d'au moins un tronçon excentrique de telle manière que la tige peut être fixée par environ un quart de tour dans l'alésage ou l'évidement.

7. Elément de fixation selon la revendication 4 à 6, **caractérisé en ce que** le boulon en matériau synthétique (21) est creux.

8. Elément de fixation selon l'une des revendications 1 à 7, **caractérisé en ce que** la vis ou le boulon en matériau synthétique sont entourés par moulage par la manchette ou douille (5, 25) réalisée en élastomère thermoplastique.

9. Elément de fixation selon l'une des revendications 1 à 8, **caractérisé en ce que** la manchette ou douille préfabriquée en matériau élastomère est poussée sur la vis ou le boulon fileté.

10. Elément de fixation selon l'une des revendications 1 à 9, **caractérisé en ce que** le diamètre de la rainure annulaire (6, 26) représente environ le double du diamètre de la vis (3) ou du boulon (21) dans leur plan.

11. Elément de fixation selon l'une des revendications 1 à 10, **caractérisé en ce qu'**au moins trois et de préférences quatre vis ou boulons sont retenus dans des gorges (2) ou alésages de la paroi arrière de l'enceinte de réfrigération (1) d'un réfrigérateur, et que sur leurs manchettes ou douilles (5, 26), un évaporateur respectivement une plaque d'évaporateur (8) est encliquetée de telle manière que ses alésages de retenue s'engagent dans les rainures (6, 26).
